Europäisches Patentamt

(19) European Patent Office

Office européen des brevets

(11) Numéro de publication : **0 151 547**
**B1**

(12) **FASCICULE DE BREVET EUROPÉEN**

(45) Date de publication du fascicule du brevet :
29.07.87

(51) Int. Cl.⁴ : **F 28 C   1/14**

(21) Numéro de dépôt : **85400111.2**

(22) Date de dépôt : **23.01.85**

(54) **Réfrigérant atmosphérique à panache réduit.**

(30) Priorité : 25.01.84 FR 8401135

(43) Date de publication de la demande :
**14.08.85 Bulletin 85/33**

(45) Mention de la délivrance du brevet :
**29.07.87 Bulletin 87/31**

(84) Etats contractants désignés :
**BE DE GB IT NL**

(56) Documents cités :
EP-A- 0 010 118
DE-C- 110 594
FR-A- 2 228 208
FR-A- 2 234 540
FR-A- 2 283 410
FR-A- 2 409 481
FR-A- 2 459 437
US-A- 3 846 519

(73) Titulaire : **ELECTRICITE DE FRANCE Service National**
**2, rue Louis Murat**
**F-75008 Paris (FR)**

(72) Inventeur : **Gautier, Daniel marcel**
**Chemin des Vaux Roux Sagy**
**F-95450 Vigny (FR)**
Inventeur : **Lagoutte, André**
**2, rue Montel**
**F-93250 Villemonble (FR)**

(74) Mandataire : **Fort, Jacques et al**
**CABINET PLASSERAUD 84, rue d'Amsterdam**
**F-75009 Paris (FR)**

## Description

L'invention concerne les réfrigérants atmosphériques du type comportant une cheminée verticale de tirage, un château d'eau central alimenté en eau à refroidir, un réseau de conduites répartissant l'eau provenant du château d'eau et la dispersant en courants de ruissellement descendant sur un lattage (souvent désigné par le terme anglo-saxon « packing ») ne comportant pas de brèche dans le sens circonférentiel et un bassin de recueil de l'eau refroidie par contact avec un écoulement d'air pénétrant par des ouvertures à la partie basse de la cheminée et remontant par cette dernière.

On connaît des réfrigérants de ce type (FR-A-2 459 437). Ils sont de plus en plus utilisés dans les centrales autres que celles situées en bord de mer car le débit que peuvent fournir les cours d'eau est fréquemment insuffisant pour permettre de refroidir le condenseur d'une centrale thermique de grande puissance sans élévation excessive de température. L'absence de brèches, telles que celles prévues dans le document US-A-3 846 519, permet de maintenir à une valeur élevée la puissance thermique évacuable par le réfrigérant.

Dans ces réfrigérants, fréquemment qualifiés d'humides, l'eau se refroidit par convection directe et par évaporation d'une fraction du débit, ce qui augmente la teneur de l'air en vapeur d'eau. La condensation partielle de cette vapeur à la sortie haute de la cheminée provoque un panache. Ce panache est visible à très grande distance dans certaines conditions atmosphériques, surtout dans le cas des réfrigérants de grande puissance dont la cheminée a une hauteur et un diamètre de l'ordre de 100 m. Au surplus, l'émission d'un débit élevé d'air ayant une teneur en vapeur d'eau proche de la saturation peut provoquer la formation de givre et de verglas à proximité. Ces nuisances sont encore plus pénalisantes lorsqu'il s'agit d'un réfrigérant de faible hauteur à tirage naturel ou forcé.

Le réfrigérant décrit dans le document FR-A-2 459 437 comporte des canaux d'air sec ménagés directement dans les éléments sur lesquels ruisselle l'eau, et dans eux seuls. En conséquence, il se produit inévitablement des entrées d'eau dans les canaux d'air sec. Le réfrigérant suivant le document FR-A-2 409 481 comporte un « corps de contact » dans lequel des canaux de circulation d'air sec sont ménagés. Ces canaux ne débordent pas de la zone d'aspersion et de ruissellement, dans le cas d'un réfrigérant à contrecourant. Cela oblige à prévoir une construction complexe destinée à éviter l'entrée d'eau provenant des buses dans les canaux d'air sec. Et le fait que les conduits ne débordent pas du « corps de contact » vers le bas provoque une humidification de l'air sec.

L'invention vise à fournir un réfrigérant dans lequel l'air de sortie a une teneur hygrométrique plus faible que dans les réfrigérants humides antérieurs, ce qui se traduit notamment par un panache moins important.

Dans ce but, l'invention propose notamment un réfrigérant du type ci-dessus défini qui comporte un réseau à deux dimensions distinctes du lattage et le traversant, d'amenée d'air non humidifié depuis les ouvertures d'admission jusqu'à une zone de la cheminée située au-delà de la zone de ruissellement, lesdits conduits étant placés de façon que leur surface soit léchée par l'eau à refroidir. Le fait que les conduits d'air non humidifié amènent l'air depuis les ouvertures prévues à la partie basse de la cheminée jusqu'à une zone de la cheminée située au-delà de la zone de ruissellement permet d'éviter toute entrée d'eau dans les conduits d'air.

L'invention peut être mise en œuvre soit lors de la construction d'un réfrigérant, soit par adaptation d'un réfrigérant existant, et cela moyennant modifications relativement peu importantes. Par ailleurs, l'invention est applicable aussi bien aux réfrigérants à courants croisés qu'aux réfrigérants à contrecourant.

Les conduits de circulation d'air constituent un échangeur sec qui peut être placé en parallèle avec l'échangeur humide par contact direct de l'air et de l'eau de ruissellement, ou en série avec cet échangeur humide.

Dans le cas d'un échangeur à courants croisés par exemple, les conduits seront disposés radialement entre des lits de lattes et s'étendront radialement depuis les ouvertures jusqu'au-delà d'une auge circulaire de dispersion de l'eau à refroidir sur les lattes en cas de montage parallèle : dans le cas d'un montage série, les conduits, qui peuvent encore être disposés de façon sensiblement radiale, pourront s'étendre à travers une chambre annulaire parcourue par l'eau à refroidir avant qu'elle n'arrive à une auge circulaire de dispersion de l'eau à refroidir sur les lattes.

Dans le cas d'un échangeur à contrecourant, les conduits pourront être placés de façon sensiblement verticale et s'étendre depuis le dessous du lattage jusqu'au-delà des conduites de répartition d'eau à refroidir.

L'invention sera mieux comprise à la lecture de la description qui suit de modes particuliers d'exécution donnés à titre d'exemples non limitatifs. La description se réfère aux dessins qui l'accompagnent, dans lesquels :

la Figure 1 est un schéma de principe en élévation de la partie basse d'un échangeur humide à contre-courant de type connu, le lattage n'étant représenté, et de façon très schématique, que sur la partie droite de la Figure,

les Figures 2 et 3 montrent, à grande échelle, une fraction d'un réfrigérant à contre-courant présentant la même constitution générale que celui de la Figure 1, mais conforme à l'invention, respectivement en coupe suivant un plan passant par l'axe et en coupe suivant la ligne III-III de la Figure 2,

les Figures 4 et 5 montrent, respectivement en coupe suivant un plan passant par l'axe et dans la direction de la flèche 5 de la Figure 4, une fraction d'un échangeur à courants croisés comportant un échangeur sec en parallèle avec l'échangeur humide,

la Figure 6, similaire à la Figure 4, montre une fraction d'un réfrigérant à courants croisés muni d'un échangeur sec en série avec l'échangeur humide,

les Figures 7 et 8 sont, respectivement, des vues suivant les flèches VII et VIII de la Figure 6.

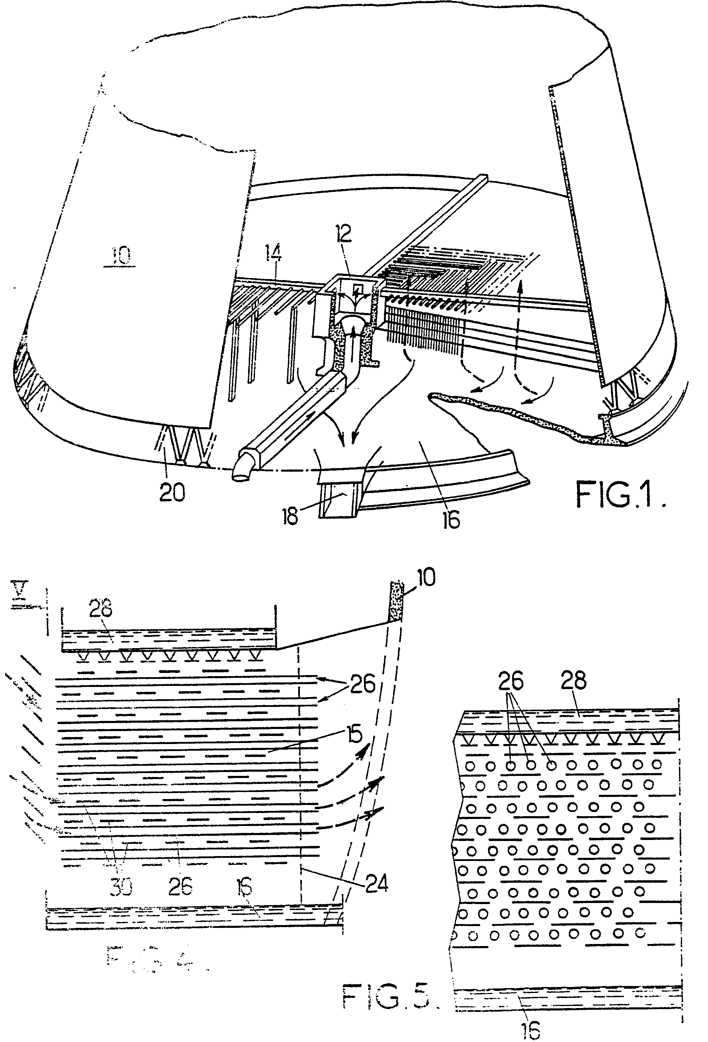

Le réfrigérant atmosphérique humide montré à titre d'exemple en Figure 1 est un appareil à contre-courant. Il comprend une cheminée verticale 10, constituée par une coque à paroi mince en forme d'hyperboloïde ou de double cône. Au centre de la cheminée est placé un château d'eau 12 alimenté en eau chaude à refroidir à sa partie inférieure. Du château d'eau partent, dans le plan horizontal, des tuyauteries de répartition radiales 14, au nombre de quatre dans le cas illustré. A ces tuyauteries se raccorde un réseau de conduites, généralement en amiante-ciment, percées suivant leur génératrice inférieure d'orifices laissant l'eau s'échapper. Les réfrigérants représentés sur la Figure 1 sont du type à ruissellement pur et à dispersion située au-dessus des entrées d'air. L'eau tombant des conduites rejaillit depuis des coupelles de dispersion et se répartit sur des plaques verticales en formant des films d'eau descendants. L'air passe verticalement entre les plaques, sous l'effet du tirage naturel.

Dans une section cylindrique donnée du réfrigérant, la température de l'eau (dont le trajet est indiqué par des flèches en trait plein) diminue graduellement de haut en bas, tandis que l'humidité et la température de l'air (dont le trajet est représenté par des flèches en tirets) s'élèvent continuellement de bas en haut jusqu'à saturation. L'eau refroidie se rassemble dans un bassin 16 d'où elle est évacuée par une prise d'eau 18. Ce bassin 16 peut être remplacé par un réseau de goulottes situées sous la dispersion.

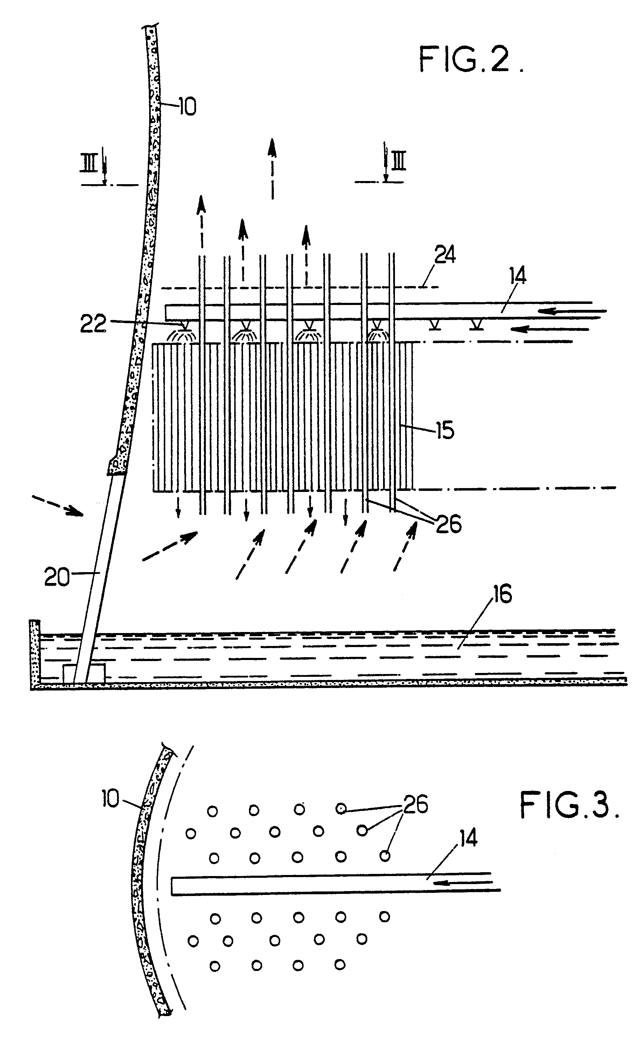

La coque 10, munie à sa partie basse des ouvertures d'entrée d'air 20, les canalisations de distribution d'eau chaude à refroidir 14, le lattage 15 et le bassin 16 apparaissent également sur la Figure 2. Sur cette Figure ont également été représentées schématiquement des conduites de répartition 22 au-dessus du lattage 15. Des séparateurs 24 sont fréquemment placés au-dessus du lattage et des canalisations 14 pour retenir les gouttelettes.

Dans le mode d'exécution de l'invention montré en Figures 2 et 3, un échangeur sec placé en parallèle avec l'échangeur humide constitué par le lattage est formé par un réseau de conduits verticaux 26 faisant saillie au-dessus du lattage 15 sur une hauteur suffisante pour ne pas être parcourue intérieurement par l'eau provenant des canalisations 14. Ces conduits 26 peuvent être constitués par des tubes, circulaires ou non, par exemple en matière plastique (telle que le polyester) armée de fibres de verre, débordant du lattage vers le bas et dépassant, vers le haut, le niveau des séparateurs 24. Ces conduits peuvent également être constitués de façon plus simple en prolongeant vers le haut des canaux régulièrement répartis du lattage 15. Dans les deux cas, on peut par exemple prévoir des conduites disposées suivant une maille triangulaire avec un écartement de 20 cm.

On voit que l'on réalise ainsi un échangeur sec en parallèle avec un échangeur humide, l'air sec sortant des conduits 26 se mélangeant avec l'air ayant traversé la zone d'échange humide de façon à donner naissance à un débit relativement homogène d'air chaud non saturé en humidité.

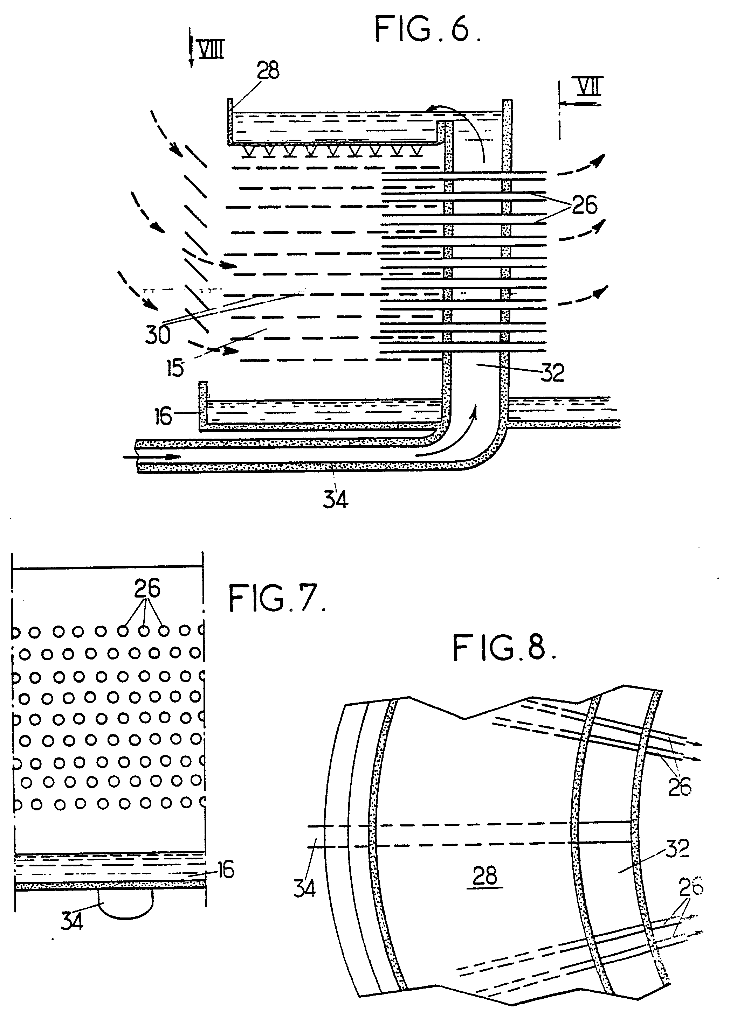

L'échangeur à courants croisés montré en Figures 4 et 5 (où les organes correspondant à ceux des Figures 2 et 3 sont désignés par le même numéro de référence) comporte un bassin annulaire 28 alimenté à partir du château d'eau, dispersant l'eau sur un lattage 15 qui est en général constitué cette fois par des lattes, en amiante-ciment en polyester ou tout autre matériau, incurvées vers le bas et en quinconce. Les gouttes d'eau provenant du bassin 28 éclatent sur les lattes, se rassemblent, puis éclatent à nouveau jusqu'à leur arrivée dans le bassin d'eau refroidie 16.

La Figure 5 montre le réfrigérant équipé d'un échangeur sec placé en parallèle avec l'échangeur humide sur le trajet de l'eau. Cet échangeur sec est constitué par des conduits de passage d'air depuis les ouvertures d'entrée jusqu'à une zone située au-delà des séparateurs 24. A titre d'exemple non restrictif, les conduits peuvent être constitués par des tubes minces ayant un diamètre compris entre 20 et 40 mm, répartis suivant une maille triangulaire avec un pas d'environ 20 cm. Dans un échangeur représentatif destiné à une centrale de 900 MWe, ces tubes 26 auront huit à dix mètres de long.

Cette solution est aisée à mettre en œuvre. Elle exige simplement de renforcer les structures existantes, mais non la puissance de soufflage pour un réfrigérant à tirage forcé.

Un réfrigérant à courants croisés peut également être muni d'un échangeur sec placé en série avec l'échangeur humide sur le trajet de circulation de l'eau, comme indiqué sur les Figures 6 à 8. Cet échangeur sec (ou du moins à humidité réduite) comporte une chambre annulaire 32 délimitée par une structure annulaire en béton. Cette chambre annulaire 32 est munie, à sa partie basse, d'une arrivée 34 en eau chaude à refroidir. Elle débouche à sa partie haute dans le bassin 28 de dispersion de l'eau sur les lattes 30. La chambre annulaire 32 est traversée par des conduits d'air 26, constitués par des tubes minces en plastique ou autre matériau. Il n'est pas indispensable que ces tubes s'étendent à travers tout le lattage 15.

Dans cette disposition, on voit que l'eau chaude se refroidit déjà au contact des tubes 26. L'eau tiède contenue dans le bassin 28 se refroidit encore dans son trajet de ruissellement et de dispersion vers le bassin 16. Cette solution augmente légèrement la perte de charge sur le trajet de l'air. Mais en contrepartie, elle permet un refroidissement supplémentaire de l'eau.

Les diverses solutions envisagées ci-dessus peuvent être combinées, en particulier dans le cas d'un réfrigérant à courants croisés, où on peut envisager une zone d'échange mixte où la dispersion ·humide est constituée par des conduits assurant également l'échange sec, suivie d'une zone sèche aval.

## Revendications

1. Réfrigérant atmosphérique comportant une cheminée verticale (10) ayant un château d'eau central (12) alimenté en eau à refroidir un réseau de conduites (14, 22, 28) répartissant l'eau provenant du château d'eau et la dispersant en courants de ruissellement descendant sur un lattage (15) ne comportant pas de brèche dans le sens circonférentiel, et un bassin (16) de recueil d'eau refroidie par contact avec un écoulement d'air pénétrant par des ouvertures (20) à la partie basse de la cheminée et montant par la cheminée, caractérisé en ce que le réfrigérant comporte un réseau à deux dimensions de conduits (26) distincts du lattage et le traversant d'amenée d'air non humidifié depuis les ouvertures jusqu'à une zone de la cheminée située au-delà de la zone de ruissellement, lesdits conduits étant placés de façon que leur surface soit léchée par l'eau à refroidir.

2. Réfrigérant selon la revendication 1 du type à courants croisés, caractérisé en ce que certains au moins des conduits (26) sont disposés à peu près horizontalement entre des lits de lattage et s'étendent radialement depuis les ouvertures jusqu'au-delà de la zone de ruissellement et de dispersion.

3. Réfrigérant selon la revendication 1 ou 2 du type à courants croisés, caractérisé en ce que certains au moins des conduits (25) sont disposés radialement à travers une chambre annulaire (32) parcourue par l'eau à refroidir sur un trajet d'arrivée à une auge (28) circulaire de dispersion de l'eau à refroidir sur le lattage.

4. Réfrigérant selon la revendication 3, caractérisé en ce que les conduits débordent de la chambre, vers l'extérieur dans le sens radial au moins, de façon à faire saillie dans le lattage.

5. Réfrigérant selon la revendication 1 du type à contre-courant, caractérisé en ce que certains au moins des conduits (26) sont sensiblement verticaux et s'étendent depuis le dessous du lattage (15) jusqu'au-delà des conduites de répartition d'eau à refroidir.

6. Réfrigérant selon la revendication 5, caractérisé en ce que les conduits sont constitués par des prolongements, s'étendant jusqu'au-dessus des conduites, des canaux ménagés dans le lattage (15).

7. Réfrigérant selon l'une quelconque des revendications précédentes, caractérisé en ce que les conduits d'air sont formés par des conduits additionnels traversant le lattage.

8. Réfrigérant selon l'une quelconque des revendications précédentes, caractérisé en ce que les conduits s'étendent jusqu'au-delà de séparateurs (24) prévus sur le trajet de l'air en aval du lattage.

9. Réfrigérant selon l'une quelconque des revendications précédentes, caractérisé en ce que les conduits sont disposés avec un pas de l'ordre de 20 cm.

## Claims

1. An atmospheric cooling tower comprising a vertical chimney (10) having a central water distributor (12) fed with water to be cooled, a network of pipes (14, 22, 28) for distributing water flowing from the water distributor and spraying it into streams which run down over a packing (15) which has no gap in the circumferential direction, and a pool (16) for collecting water cooled by contact with an airflow entering through openings (20) at the lower part of the chimney and flowing upwardly through the chimney, characterized in that the cooling tower comprises a two-dimensional lattice of ducts (26) which are distinct from said lattice and project therethrough for bringing non-humidified air from the openings up to a zone of the chimney which is located downward of the run down zone, said ducts being arranged so that their surface be swept by water to be cooled.

2. Cooling tower according to claim 1, of the crossed current type, characterized in that some at least of the ducts (26) are located substantially horizontally between beds of packing slats and extend radially from the openings up to beyond the running down and spraying zone.

3. Cooling tower according to claim 1 or 2 of the crossed current type, characterized in that some at least of the ducts (26) are located radially through an annular chamber (32) swept by the water to be cooled, on a path of arrival to a circular trough (28) for spraying the water to be cooled onto the packing.

4. Cooling tower according to claim 3, characterized in that the ducts project out of said chamber, radially outwardly at least, whereby they project into said packing.

5. Cooling tower according to claim 1 of the counter-current type, characterized in that some at least of the ducts (26) are substantially vertical and extend from under the packing (15) up to beyond the pipes for distributing the water to be cooled.

6. Cooling tower according to claim 5, characterized in that the ducts consist of extensions of channels provided in the packing (15), extending beyond the pipes upwardly.

7. Cooling tower according to any one of the preceding claims, characterized in that the air ducts consist of supplemental ducts projecting across the packing.

8. Cooling tower according to any one of preceding claims, characterized in that the ducts extend up to beyond separators (24) located on the air path downstream of the packing.

9. Cooling tower according to any one of the preceding claims, characterized in that the ducts are arranged with a spacing of about 20 centimeters.

**Patentansprüche**

1. Atmosphärischer Kühler, enthaltend einen senkrechten Schacht (10) mit einem zentralen Wasserhochbehälter (12), der mit zu kühlenden Wasser gespeist wird, ein Netz von Leitungen (14, 22, 28), die das vom Wasserhochbehälter kommende Wasser verteilen und es als Rieselströme austeilen, die auf ein Lattenwerk (15) abfließen, das in Umfangsrichtung keine Lücke hat, und ein Becken (16) zum Auffangen von gekühltem Wasser, das durch Berührung mit einem Luftstrom gekült wird, der durch Öffnungen (20) am Unterteil des Schachts eindringt und durch den Schacht aufsteigt, dadurch gekennzeichnet, daß der Kühler ein zweidimensionales Netz von Leitungen (26) aufweist, die vom Lattenwerk gesondert sind und dieses durchqueren, für die Zufuhr von nicht befeuchteter Luft von den Öffnungen bis zu einer Zone des Schachts, die sich jenseits der Rieselzone befindet, wobei diese Leitungen so angeordnet sind, daß ihre Oberfläche von dem zu kühlenden Wasser überstrichen wird.

2. Kühler nach Anspruch 1 von der Bauart mit Querströmen, dadurch gekennzeichnet, daß wenigstens gewisse Leitungen (26) zwischen den Lattenwerkslagen ungefähr waagrecht angeordnet sind und sich von Öffnungen bis jenseits der Riesel- und Austeilungszone radial erstrecken.

3. Kühler nach Anspruch 1 oder 2 von der Bauart mit Querströmen, dadurch gekennzeichnet, daß wenigstens gewisse Leitungen (26) radial durch eine ringförmige Kammer (32) hindurch angeordnet sind, die von dem zu kühlenden Wasser auf einer Zuflußbahn zu einem kreisförmigen Trog durchströmt wird, der der Austeilung des zu kühlenden Wassers auf das Lattenwerk dient.

4. Kühler nach Anspruch 3, dadurch gekennzeichnet, daß Leitungen aus der Kammer nach außen wenigstens in Radialrichtung derart austreten, daß sie in das Lattenwerk ragen.

5. Kühler nach Anspruch 1 von der Bauart mit Gegenstrom, dadurch gekennzeichnet, daß wenigstens gewisse Leitungen (26) im wesentlichen senkrecht sind und sich von unterhalb des Lattenwerks (15) bis jenseits der Verteilungsleitungen für das zu kühlende Wasser erstrecken.

6. Kühler nach Anspruch 5, dadurch gekennzeichnet, daß die Leitungen durch Verlängerungen gebildet sind, die sich bis oberhalb der Leitungen von im Lattenwerk (15) ausgebildeten Kanälen erstrecken.

7. Kühler nach einem der vorhergehenden Ansprüche, dadurch gekennzeichnet, daß die Luftleitungen durch zusätzliche das Lattenwerk durchquerende Leitungen gebildet sind.

8. Kühler nach einem der vorhergehenden Ansprüche, dadurch gekennzeichnet, daß sich die Leitungen bis jenseits von Separatoren (24) erstrecken, die in der Bahn der Luft in Strömungsrichtung abwärts vom Lattenwerk vorgesehen sind.

9. Kühler nach einem der vorhergehenden Ansprüche, dadurch gekennzeichnet, daß die Leitungen in einem Abstand in der Größenordnung von 20 cm angeordnet sind.

0 151 547

FIG.1.

FIG.4.

FIG.5.

FIG.2.

FIG.3.

# FIG.6.

# FIG.7.

# FIG.8.